# EUROPÄISCHE PATENTANMELDUNG

(11) **EP 2 343 646 A1**
(43) Veröffentlichungstag der Anmeldung: **13.07.2011**
(21) Anmeldenummer: 10150185.6
(22) Anmeldetag: 06.01.2010
(51) Int. Cl.: G06F 9/44

(54) **Verfahren und Vorrichtung zur Anzeige kontextabhängiger Metadaten in Informationssystemen**

(71) Anmelder: dmi AG, 9001 St.Gallen (CH); Hüner, Kai, 9000 St. Gallen (CH); Österle, Hubert, 9000 St. Gallen (CH); Ofner, Martin, 9000 St. Gallen (CH); Otto, Boris, 9000 St. Gallen (CH)
(72) Erfinder: Hüner, Kai, 9000, St. Gallen (CH); Österle, Hubert, 9000, St. Gallen (CH); Ofner, Martin, 9000, St. Gallen (CH); Otto, Boris, 9000, St. Gallen (CH)
(74) Vertreter: OK pat AG

(57) **Zusammenfassung**

Die Erfindung besteht aus einer Vorrichtung und einem Verfahren zur Erkennung von Zeichenfolgen (Objekten), die z.B. auf einem Computerbildschirm angezeigt werden, sowie dem Auffinden und Anzeigen von Erläuterungen, welche die erkannten Zeichenfolgen erklären. Die zu erkennende Zeichenfolge wird von einem menschlichen Benutzer auf einem Computerbildschirm markiert und die in einem Informationssystem gespeicherten Erläuterungen unter Berücksichtigung des Kontextes der Zeichenfolge automatisch ermittelt und dem Benutzer angezeigt.

## Beschreibung

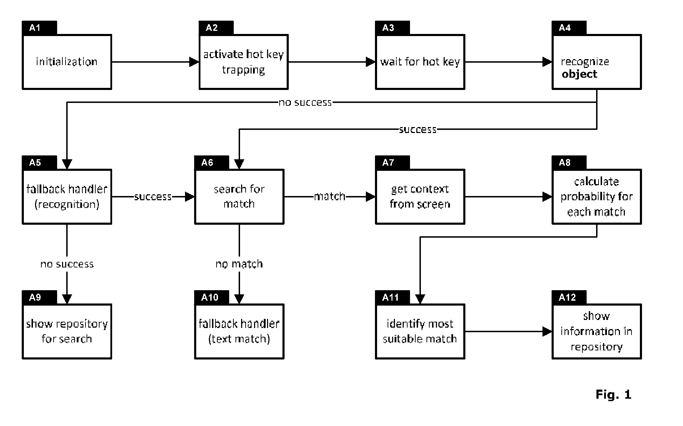

Die Vorrichtung umfasst ein Informationssystem (im Folgenden Repository genannt), in dem Erläuterungen (im Folgenden Metadaten genannt) für bestimmte Begriffe gespeichert sind und eine Integrationsanwendung (im Folgenden Tool genannt). Das Repository wird zentral bereitgestellt und betrieben, das Tool wird auf Arbeitsplatzrechnern ausgeführt. Die folgenden Erläuterungen beziehen sich auf die in Fig. 1 dargestellte Verfahrensskizze. Verweise in Form von Bezugzeichen (z.B. A01) werden entsprechend angegeben.

In dieser Beschreibung und den Ansprüchen werden die Begriffe wie folgt verwendet: Der Begriff "Markierung" oder "markieren" soll als Oberbegriff für das Auswählen, Markieren oder anderweitige Kennzeichnen verstanden werden.

Ein Text, eine Zeichenfolge, ein Begriff oder ein Muster (pattern) wird hier als Objekt bezeichnet.

Der Begriff "Ermitteln" soll als Synonym verstanden werden für das Erkennen.

Der Begriff "Informationssystem" wird hier verwendet für betriebliche Informationsverarbeitungssysteme (z. B. SAP ERP, Microsoft Outlook, Lotus Notes).

Ein Repository ist im Sinne der vorliegenden Erfindung ein Speicher, z. B. in Form eines Festplattenspeichers, der Information in abrufbarer Form enthält. Der Begriff Repository kann auch für netzwerkbasierte Speicherlösungen stehen, bei denen der Informationsinhalt über mehrere verteilte Speicher verteilt ist.

Das Abrufen, Anzeigen, Darstellen, Weitergeben oder Ausgeben wird hier zusammenfassend als Bereitstellung oder Bereitstellen bezeichnet.

Metadaten dienen zur Charakterisierung, Beschreibung oder Erläuterung von Daten und beinhalten Informationen, die einen intelligenten und effizienten Zugriff auf diese Daten und deren Verwaltung ermöglichen.

Der Begriff "Tool" wird für Software-basierte Abläufe oder Prozesse verwendet.

Bei der Initialisierung des Tools (Schritt oder Prozess A1 in Fig. 1) startet dieses eine Kommunikation mit dem Repository und erhält eine Liste mit im Repository gespeicherten und erläuterten Begriffen. Ausserdem übermittelt das Repository Kontextinformationen zu jedem Begriff an das Tool. Das Tool registriert vorzugsweise ausserdem eine Tastenkombination (im Folgenden Hot Key, Schritt oder Prozess A2 in Fig. 1), die zum Beispiel von einem Benutzer über eine Benutzerschnittstelle (z.B. ein Eingabegerät in Form einer Tastatur oder eines Touch-Screens) eingegeben wird.

Das Verfahren wartet nun auf eine Eingabe seitens eines Benutzers (Schritt oder Prozess A3 in Fig. 1).

Wenn der Benutzer den vordefinierten Hot Key eingibt, ändert sich der Cursor auf einem Bildschirm oder einer Anzeige zu dem der Benutzer Zugang hat. Auf diesem Bildschirm oder dieser Anzeige kann der Benutzer Objekte (z.B. Text oder Muster, auch "pattern" genannt), die auf dem Bildschirm angezeigt werden, markieren oder selektieren. Sobald ein Bereich oder Objekt auf dem Bildschirm oder der Anzeige markiert oder selektiert wird, versucht das Tool, das markierte Objekt zu erkennen (Schritt oder Prozess A4, Fig. 1). Falls diese Erkennung scheitert ("no success" genannt), hat der Benutzer z.B. die Möglichkeit, ein anderes Verfahren zu nutzen (Schritt oder Prozess A5, Fig. 1). Dieses andere Verfahren wird durch einen "fallback handler" realisiert, wie in Fig. 1 angedeutet.

Falls die Objekterkennung gelingt ("success" genannt) (Schritt oder Prozess A6, Fig. 1), wird das erkannte Objekt mit den vom Repository übermittelten Werten verglichen. Dieser Schritt oder Prozess ist in Fig. 1 mit A6 bezeichnet. Falls keine Übereinstimmung festgestellt werden kann ("no match" genannt), startet ein anderer "Fallback Handler" (Schritt oder Prozess A10, Fig. 1). Bei mindestens einer Übereinstimmung ("match" genannt) wird der Kontext des erkannten Objekts (zum Beispiel ein erkannter Begriff) ermittelt (Schritt oder Prozess A7, Fig. 1). Das Objekt und der ermittelte Kontext werden dann mit den Objekten (z.B. Begriffen) und den jeweiligen Kontextinformationen des Repositories verglichen und es wird ein Ranking erstellt (Schritt oder Prozess A8, Fig. 1). Zu diesem Zweck kann z.B. die Wahrscheinlichkeit eines Treffers errechnet werden ("calculate probability for each match" genannt).

Der am höchsten eingestufte Wert (Schritt oder Prozess A11, Fig. 1) wird schliesslich mit einer Statusmeldung an das Repository übermittelt, welches die entsprechende Erläuterung auf dem Bildschirm oder der Anzeige des Benutzers anzeigt (Schritt oder Prozess A12, Fig. 1).
Im Folgenden werden die einzelnen Schritte oder Prozesse näher beschrieben.
**A1 Initialization**. Das Tool, das z.B. auf dem Arbeitsplatzrechner oder einem anderen Rechner (z.B. einem PDA (Personal Digital Assistant), Smartphone, etc.) eines Benutzers installiert ist, wird gestartet. Es stellt eine Verbindung mit dem Repository her und bekommt eine Liste von Objekten (z.B. Begriffe), zu denen Metadaten im Repository vorhanden sind.
**A2 Activate hot key trapping.** Das Tool aktiviert eine Überwachung der Tastatureingaben des Benutzers. Durch diese Überwachung wird erkannt, wenn der Benutzer einen bestimmten Hot Key (z.B. Alt + X) eingibt. Der Hot Key kann vorzugsweise vom Benutzer definiert werden.
**A3 Wait for hot key.** Das Tool wird vorzugsweise während der normalen Arbeit des Benutzers ausgeführt, tritt aber nicht in Erscheinung. Es läuft also vorzugsweise im Hintergrund. Sobald der Benutzer den Hot Key eingibt, ändert sich vorzugsweise der Mauszeiger, oder es wird z.B. ein Signal ausgegeben, und der Benutzer kann auf dem Bildschirm oder einer Anzeige angezeigte Objekte (z.B. Text oder Muster) markieren oder selektieren.
**A4 Recognize object.** Sobald die Markierung eines oder mehrerer Objekte durch den Benutzer abgeschlossen ist, versucht das Tool die markierten Objekte zu erkennen (z.B. mit Hilfe eines Text oder Mustererkennungs-Algorithmus) und als digitale Zeichenfolge zu speichern.
**A5 Fallback handler (recognition).** Falls die Erkennung (Schritt oder Prozess A4, Fig. 1) fehlschlägt (no success), wird eine alternative Möglichkeit bereitgestellt, durch die der Benutzer ein Objekt (z.B. eine Zeichenfolge oder ein Muster) angeben kann (z.B. durch einen Bildschirmdialog mit einem Eingabefeld).
**A6 Search for match.** Das erkannte Objekt (z.B. eine Zeichenfolge oder ein Muster) (Ergebnis von A4 oder A5 in Fig. 1) wird mit den vorgehaltenen Objekten (z.B. Begriffen) aus dem Repository (vgl. Schritt oder Prozess A1) verglichen. Dabei werden Übereinstimmungen gesucht.
**A7 Get context from screen.** Ein Objekt (z.B. ein Begriff) kann in unterschiedlichen Kontexten eine unterschiedliche Bedeutung haben. Entsprechend können im Repository für das gleiche Objekt kontextabhängig verschiedene Metadaten vorhanden sein. Daher versucht das Tool (bei mehr als einer Übereinstimmung in Schritt oder Prozess A6) den Kontext, in dem das erkannte Objekt markiert wurde, zu erfassen.
**A8 Calculate probability for each match.** Bei mehr als einer Übereinstimmung in Schritt oder Prozess A6 auf Basis dieses Kontextes und der Metadaten des Repositories wird die Wahrscheinlichkeit für jedes Objekt (z.B. jeden Begriff) kalkuliert.
A9 **Show repository for search.** Falls auch die alternative Möglichkeit zur Angabe einer Zeichenfolge (Schritt oder Prozess A5, Fig. 1) fehlschlägt (no success), wird dem Benutzer das Repository zur manuellen Suche nach Metadaten angeboten oder der Vorgang wird abgebrochen.
**A10 Fallback handler (text match).** Falls es keine Übereinstimmung zwischen den Objekten (z.B. Begriffen), die im Repository vorhanden sind, (vgl. Schritt oder Prozess A1) und den erkannten Objekten (z.B. Zeichenfolge oder Muster) (vgl. Schritt oder Prozess A6) gibt, kann der Benutzer seine Markierung oder Auswahl korrigieren (Rücksprung zu Schritt oder Prozess A4), oder das Repository wird zur manuellen Suche angeboten (vgl. Schritt oder Prozess A9), oder der Vorgang wird abgebrochen.
**A11 Identify most suitable match.** Auf Basis der kalkulierten Wahrscheinlichkeiten (vgl. Schritt oder Prozess A8) wird das wahrscheinlichste Objekt (z. B ein Begriff) bestimmt.
**A12 Show information repository.** Die Metadaten zu dem Objekt (z. B. einem Begriff), der in Schritt oder Prozess A11 ermittelt wurde, werden dem Benutzer auf dem Bildschirm oder der Anzeige angezeigt.
Weitere Ausführungsformen der Erfindung sind auch möglich ohne über die erfinderische Idee der vorliegenden Erfindung hinaus zu gehen. Solche Ausführungsformen ergeben sich z.B. aus einer Kombination der genannten Merkmale oder Schritte. Die Erfindung lässt sich nicht nur auf fest vernetzte Computersysteme anwenden, sondern sie kann auch in tragbaren Computersystemen zum Einsatz kommen, bei denen mindestens ein Teil der erforderlichen Verbindungen mittels drahtloser Kommunikation abläuft. Die Erfindung kann zum Beispiel von einem Benutzer eingesetzt werden, um von einem tragbaren Computer (oder z.B. einem Personal Digital Assistant (PDA), Smartphone, etc.) aus Anfragen über das Repository zu starten. In diesem Fall ist das Tool z. B. als Applet oder Skript realisiert. Die Auslösung des Hot-Keys kann hier auch mittels Interaktion mit dem drucksensitiven Display (z.B. "pen stroke gestures") ausgelöst werden. Es ist auch ein Browser-basierte Lösung möglich, bei der die Ein- und Ausgaben in einem Browserfenster erfolgen.

## Patentansprüche

1. Verfahren zum kontextabhängigen Auffinden von Metadaten, welches die folgenden Schritte umfasst:
- Markieren eines Objekts mittels einer Benutzerschnittstelle oder eines Computers,
- software-basierte Erkennung des markierten Objekts;
- software-basiertes Vergleichen des erkannten Objekts, vorzugsweise mit vorgegebenen Objekten aus einem Repository;
- Falls mehrere Objekte aus dem Repository mit dem erkannten Objekt übereinstimmen:
- software-basiertes Ermitteln des Kontextes der markierten Objekte,
- software-basiertes Kalkulieren der Wahrscheinlichkeit für jedes Objekt auf Basis des Kontextes und von Metadaten aus dem Repository,
- software-basiertes Bestimmen des wahrscheinlichsten Objekts auf Basis der kalkulierten Wahrscheinlichkeiten,
- Bereitstellen der Metadaten entsprechend dem wahrscheinlichsten Objekt.

2. Vorrichtung zum kontextabhängigen Auffinden von Metadaten umfassend:
- eine Benutzerschnittstelle oder einen Computer zum Markieren eines Objekts;
- ein Repository zur Ablage von Objekten, wobei dieses Repository mit der Benutzerschnittstelle oder dem Computer verbindbar ist;
- ein Bearbeitungsmodul zur:
- software-basierten Erkennung der markierten Objekte;
- software-basiertes Vergleichen der erkannten Objekte mit Objekten aus dem Repository;
- software-basierte Erkennung des Kontextes der markierten Objekte;
- software-basiertes Kalkulieren einer Wahrscheinlichkeit für jedes Objekt auf Basis des Kontextes und von Metadaten aus dem Repository;
- software-basiertes Bestimmen des wahrscheinlichsten Objekts auf Basis der kalkulierten Wahrscheinlichkeiten
- Bereitstellen der Metadaten entsprechend dem wahrscheinlichsten Objekt auf einem Ausgabegerät oder Computer.
